(19) **Europäisches Patentamt**

**European Patent Office**

**Office européen des brevets**

(11) **EP 1 088 739 B1**

(12) **EUROPEAN PATENT SPECIFICATION**

(45) Date of publication and mention
of the grant of the patent:
**30.03.2005 Bulletin 2005/13**

(51) Int Cl.⁷: **B62D 6/00**

(21) Application number: **00120342.1**

(22) Date of filing: **16.09.2000**

(54) **Motor vehicle steering system**

Kraftfahrzeuglenksystem

Système de direction de véhicule automobile

(84) Designated Contracting States:
**DE FR GB IT**

(30) Priority: **28.09.1999 JP 27401199**

(43) Date of publication of application:
**04.04.2001 Bulletin 2001/14**

(73) Proprietor: **Koyo Seiko Co., Ltd.**
**Osaka-shi, Osaka 542-0081 (JP)**

(72) Inventors:
• **Nishizaki, Katsutoshi**
**Nabari-shi, Mie 518-0735 (JP)**
• **Nakano, Shirou**
**Minamikawachi-gun, Osaka 585-0044 (JP)**
• **Takamatsu, Takanobu**
**Habikino-shi, Osaka 583-0872 (JP)**
• **Segawa, Masaya**
**Tenri-shi, Nara 632-0072 (JP)**

(74) Representative: **Steil, Christian, Dipl.-Ing. et al**
**Witte, Weller & Partner,**
**Postfach 10 54 62**
**70047 Stuttgart (DE)**

(56) References cited:
**EP-A- 0 775 624**       **US-A- 4 602 695**
**US-A- 4 840 389**

• **PATENT ABSTRACTS OF JAPAN vol. 1998, no.**
**01, 30 January 1998 (1998-01-30) -& JP 09 249145**
**A (TOYOTA MOTOR CORP), 22 September 1997**
**(1997-09-22)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to a motor vehicle steering system, which is capable of modifying a relationship between the steering of steerable vehicle wheels and the operation of operation means such as a steering wheel.

Description of Related Art

A steering system for a motor vehicle has been proposed, in which a steering wheel is mechanically disengaged from a steering mechanism for steering steerable vehicle wheels, and the direction and amount of operation of the steering wheel are detected and a driving force from an actuator such as an electric motor is applied to the steering mechanism on the basis of the result of the detection (see, for example, Japanese Unexamined Patent Publication No.09-142330 (1997)).

This arrangement obviates the need for mechanical coupling between the steering mechanism and the steering wheel, so that upward thrust of the steering wheel can be prevented at collision of the motor vehicle. Further, this arrangement allows for structural simplification and weight reduction of the steering mechanism, and more flexible placement of the steering wheel. Moreover, this arrangement makes it possible to employ other operation means such as a steering lever and a steering pedal instead of the steering wheel.

In the motor vehicle steering system having the aforesaid construction, a relationship between the operation of the steering wheel and the operation of the steering mechanism can flexibly be modified through an electrical control. Therefore, the maneuverability of the motor vehicle is expected to be drastically improved.

The dynamic characteristics of the motor vehicle responsive to the steering operation (over-steering, under-steering, neutral-steering and the like), for example, are determined by various factors (parameters such as weight, wheel base, gravity center and the like) of the motor vehicle. The dynamic characteristics can be optimized by properly setting the relationship between the operation of the steering wheel and the operation of the steering mechanism through an electrical control.

The dynamic characteristics of the motor vehicle are represented by dynamic parameters such as responsiveness to the steering operation, rigidity and compliance. However, these parameters are contradictory to each other in some cases due to the nature of the control operation, so that it is difficult to satisfy all the parameters. For example, a higher responsiveness is required in an urgent operation for avoidance of a risk, while a higher rigidity is required in straight traveling for elimination of stagger. It is impossible to satisfy these two requirements. Further, when turning, the steering control is required to be compliant to what a driver wants to do (operation of the steering wheel). Therefore, an emphasis is posed on the compliance, but the rigidity is sacrificed to achieve a higher compliance.

A rear wheel steering system comprising the features mentioned in the preamble of claim 1 is disclosed in JP09249145A.

SUMMARY OF THE INVENTION

It is an object of the present invention to provide a steering system for a motor vehicle which improves the dynamic characteristics of the motor vehicle by properly performing a steering control according to the traveling state of the motor vehicle.

In accordance with the present invention, there is provided a motor vehicle steering system for driving a steering mechanism of a motor vehicle on the basis of operation of operation means, the motor vehicle steering system comprising: standard value computing means for computing a standard value of a behavioral variable indicative of behavior of the motor vehicle in accordance with the operation of the operation means; vehicle behavior detecting means for detecting an actual value of the behavioral variable indicative of actual behavior of the motor vehicle; traveling state determining means for determining a traveling state of the motor vehicle; a steering controlling section for driving the steering mechanism according to an operation angle of the operation means; characterized by a traveling state adapting means for causing the steering controlling section to modify a control state of the steering mechanism so as to control a change in the behavioral variable in a phase advanced manner, a phase delayed manner or a neutrally balanced manner on the basis of the result of the determination of the traveling state determining means. The term "phase advanced manner" herein means such a manner that the actual value of the behavioral variable changes more rapidly than the standard value of the behavioral variable, and the term "phase delayed manner" herein means such a manner that the actual value of the behavioral variable changes more slowly than the standard value of the behavioral variable. The term "neutrally balanced manner" herein means a manner which is neither the phase advanced manner nor the phase delayed manner.

It is preferred that the operation means is mechanically disengaged from the steering mechanism, and the steering mechanism is electrically controlled according to the operation of the operation means.

In accordance with the invention, the steering mechanism is variably controlled so that the change in the vehicle behavioral variable is controlled in the phase advanced manner, the phase delayed manner or the neutrally balanced manner according to the traveling state of the motor vehicle. Thus, the steering control is properly performed according to the traveling state, whereby the dynamic characteristics of the motor vehicle are improved.

The traveling state determining means may be capable of distinguishing, for example, between an urgent state where the operation means is operated for urgent steering, a straight traveling state where the motor vehicle is traveling straight, and a turning state where the motor vehicle is turned.

In this case, the traveling state adapting means preferably sets the control state of the steering controlling section so as to control the change in the vehicle behavioral variable in the phase advanced manner, when the traveling state determining means determines that the vehicle traveling state is the urgent state. When the traveling state determining means determines that the vehicle traveling state is the straight traveling state, the traveling state adapting means preferably sets the control state of the steering controlling section so as to control the change in the vehicle behavioral variable in the phase delayed manner. Further, when the traveling state determining means determines that the vehicle traveling state is the turning state, the traveling state adapting means preferably sets the control state of the steering controlling section so as to control the change in the vehicle behavioral variable in the neutrally balanced manner.

With this arrangement, the responsiveness is improved in the urgent steering by controlling the change in the vehicle behavioral variable in the phase advanced manner. The rigidity is improved in the straight traveling by controlling the change in the vehicle behavioral variable in the phase delayed manner. The compliance is improved in the turning of the motor vehicle by controlling the change in the vehicle behavioral variable in the neutrally balanced manner. Thus, the parameters of the dynamic characteristics of the motor vehicle which are liable to be contradictory to each other can separately be improved according to the traveling state of the motor vehicle, so that the parameters can each be set at an optimum level for drastic improvement of the overall dynamic characteristics of the motor vehicle.

The behavioral variable of the motor vehicle may include a lateral acceleration. Further, the behavioral variable of the motor vehicle may include a yaw rate.

The lateral acceleration and/or the yaw rate of the motor vehicle are controlled in the phase advanced manner, the phase delayed manner or the neutrally balanced manner according to the traveling state of the motor vehicle, whereby the attitude control of the motor vehicle can properly be performed for improvement of the control of the traveling direction of the motor vehicle.

The foregoing and other objects, features and effects of the present invention will become more apparent from the following description of the preferred embodiment with reference to the attached drawings.

## BRIEF DESCRIPTION OF THE DRAWINGS

Fig. 1 is a conceptual diagram illustrating the basic construction of a steering system for a motor vehicle in accordance with one embodiment of the present invention; and
Fig. 2 is a block diagram for explaining a steering control operation.

## DESCRIPTION OF THE PREFERRED EMBODIMENTS

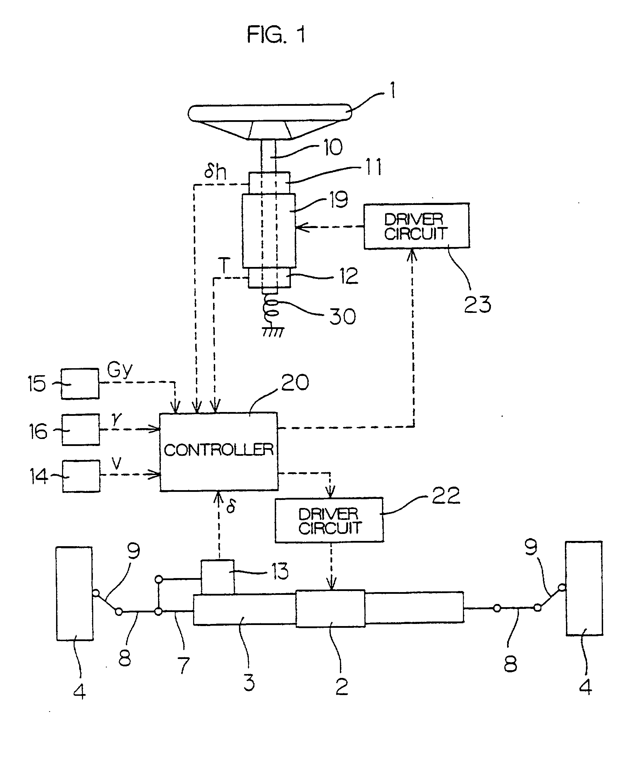

Fig. 1 is a conceptual diagram illustrating the basic construction of a steering system for a motor vehicle in accordance with one embodiment of the present invention. The motor vehicle steering system performs a steering operation by converting a motion of a steering actuator 2 driven in accordance with the rotational operation of a steering wheel (operation means) 1 into a turning motion of right and left front wheels (steerable wheels) 4 by a steering gear 3 without mechanical coupling between the steering wheel 1 and the steering gear 3. In this case, the steering actuator 2, the steering gear 3 and the like constitute a steering mechanism.

The steering actuator 2 is comprised of a known electric motor such as a brushless motor. The steering gear 3 has a motion converting mechanism (e. g., a ball screw mechanism) for converting a rotational motion of an output shaft of the steering actuator 2 into a linear axial motion of a steering rod 7 (in a vehicle widthwise direction). The motion of the steering rod 7 is transmitted to knuckle arms 9 via tie rods 8 to rotate the knuckle arms 9. Thus, the wheels 4 supported by the knuckle arms 9 are turned.

The steering wheel 1 is coupled to a rotary shaft 10 supported rotatably with respect to a vehicle body. The rotary shaft 10 is provided with a reaction force actuator 19 for applying a steering reaction force to the steering wheel 1. More specifically, the reaction force actuator 19 may be comprised of an electric motor such as a brushless motor having an output shaft unitary to the rotary shaft 10.

A resilient member 30 such as a coil spring is provided between the rotary shaft 10 and the vehicle body at an end of the rotary shaft 10 opposite from the steering wheel 1. The resilient member 30 causes the steering wheel 1 to return to a straight steering position by its resilient force when the reaction force actuator 19 applies no torque to the steering wheel 1.

An angle sensor 11 for detecting an operation angle $\delta h$ which is equivalent to the rotation angle of the rotary shaft 10 is provided for detection of an input operation value of the steering wheel 1. The rotary shaft 10 is provided with a torque sensor 12 for detecting an operating torque T applied to the steering wheel 1.

A steering angle sensor 13 for detecting a steering angle δ of the wheels 4 is provided as an output value sensor for detecting an output value of the steering actuator 2. The steering angle sensor 13 may be comprised of a potentiometer which detects an operation amount of the steering rod 7 operated by the steering actuator 2.

The angle sensor 11, the torque sensor 12 and the steering angle sensor 13 are connected to a steering system controller (steering controlling section) 20 including a computer. The controller 20 is further connected to a lateral acceleration sensor 15 for detecting a lateral acceleration Gy of the motor vehicle, a yaw rate sensor 16 for detecting a yaw rate γ of the motor vehicle and a speed sensor 14 for detecting a vehicle speed V. Besides the sensors for the detection of the operation angle δh and the vehicle speed V, a sensor for detecting a wheel speed which also serves as a variable correlated with the lateral acceleration Gy and the yaw rate γ, for example, may be connected to the controller 20.

The controller 20 controls the steering actuator 2 and the reaction force actuator 19 via driver circuits 22, 23.

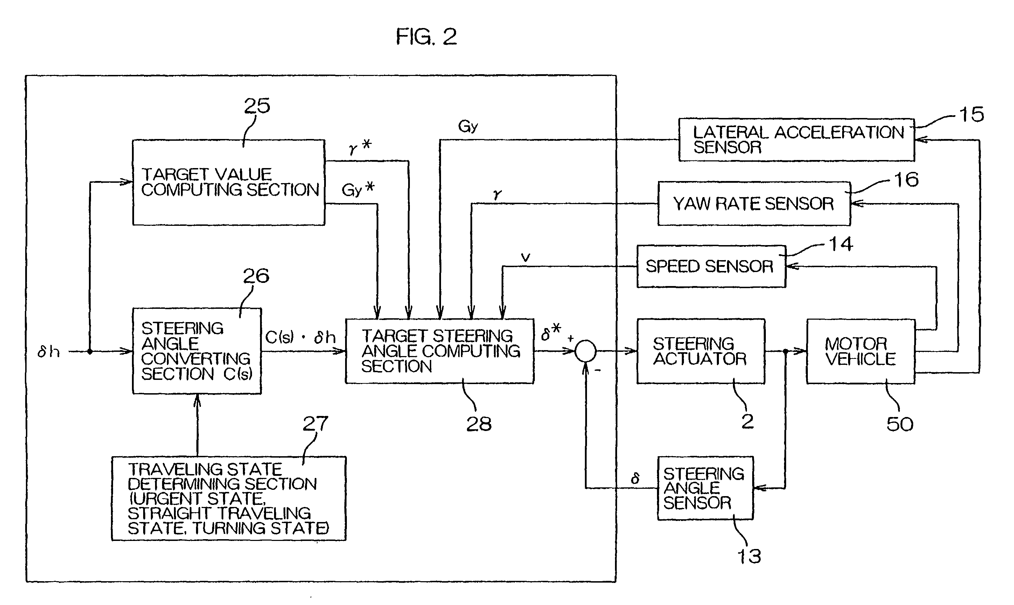

Fig. 2 is a block diagram for explaining a control operation to be performed on the steering actuator 2 by the controller 20. The controller 20 implements the operations of the respective functional sections shown in Fig. 2 through program-based processes to be performed by the computer.

More specifically, the controller 20 has a target value computing section 25 for computing on the basis of a vehicle dynamic behavior model a target lateral acceleration Gy* and a target yaw rate γ* which respectively correspond to a standard lateral acceleration and a standard yaw rate for an operation angle δh, a steering angle converting section 26 for converting the operation angle δh into a steering angle C(s)·δh suitable for the control, a traveling state determining section 27 for determining which of an urgent state, a straight traveling state and a turning state is the present traveling state of the motor vehicle, and a target steering angle computing section 28 for computing a target steering angle δ* for the control of the steering actuator 2.

The target steering angle computing section 28 determines the target steering angle δ* suitable for the control steering angle C(s)·δh on the basis of the target lateral acceleration Gy* and the target yaw rate γ* computed by the target value computing section 25, the actual lateral acceleration Gy of the motor vehicle detected by the lateral acceleration sensor 15, the actual yaw rate γ of the motor vehicle detected by the yaw rate sensor 16, and the vehicle speed V detected by the speed sensor 14. The steering actuator 2 is feedback-controlled on the basis of the target steering angle δ*, whereby the motor vehicle 50 (more specifically the wheels 4) is properly steered for the control of the traveling direction of the motor vehicle 50.

Depending on the result of the determination of the traveling state determining section 27, the steering angle converting section 26 operates so that the lateral acceleration Gy and the yaw rate γ are brought into a phase advanced relation, a phase delayed relation or a neutrally balanced relation with respect to the target values Gy* and γ*. More specifically, a transfer function C(s) is properly modified on the basis of the result of the determination of the traveling state determining section 27 to achieve an attitude control optimum to the traveling state.

The transfer function C(s) is represented, for example, by the following expression (1):

$$C(s)= \frac{\beta T \cdot s+1}{\alpha T \cdot s+1} \qquad (1)$$

wherein T is a time constant, s is a Laplacian, and α and β are variable coefficients.

To bring the lateral acceleration Gy and the yaw rate γ into the phase advanced relation with respect to the target values Gy* and γ*, the coefficients α and β are set to satisfy the following expression (2):

$$0<\alpha<1, \quad \beta=1 \qquad (2)$$

To bring the lateral acceleration Gy and the yaw rate γ into the phase delayed relation with respect to the target values Gy* and γ*, the coefficients α and β are set to satisfy the following expression (3):

$$\alpha=1, \quad 0<\beta<1 \qquad (3)$$

To bring the lateral acceleration Gy and the yaw rate γ into the neutrally balanced relation free from a phase advance and a phase delay with respect to the target values Gy* and γ*, the coefficients α and β are set to satisfy the following expression (4):

$$\alpha=1, \quad \beta=1 \qquad (4)$$

If the traveling state determining section 27 determines that the vehicle traveling state is the urgent state where the steering wheel 1 is operated for urgent steering, the steering angle converting section 26 performs the conversion of the operation angle δh by employing the transfer function C(s) of the expression (1) with the coefficients α, β set as defined by the expression (2) to determine the control steering angle C(s)·δh. Thus, the responsiveness of the control of the lateral acceleration Gy and the yaw rate γ (attitude control) is improved, whereby the urgent steering is achieved according to the operation of the steering wheel 1.

If the traveling state determining section 27 determines that the traveling state of the motor vehicle 50 is the straight traveling state, the steering angle converting section 26 performs the conversion of the operation angle δh by employing the transfer function C(s) of the expression (1) with the coefficients α, β set as defined by the expression (3) to determine the control steering angle C(s)·δh. Thus, the responsiveness of the control of the lateral acceleration Gy and the yaw rate γ is reduced but, instead, the rigidity is increased. Therefore, a sufficient rigidity can be provided for elimination of stagger in the straight traveling.

If the traveling state determining section 27 determines that the vehicle traveling state is the turning state, the steering angle converting section 26 performs the conversion of the operation angle δh by employing the transfer function C(s) of the expression (1) with the coefficients α, β set as defined by the expression (4) to determine the control steering angle C(s)·δh. Thus, the lateral acceleration Gy and the yaw rate γ satisfactorily follow the operation of the steering wheel 1, so that the compliance is improved. Therefore, the control of the traveling direction of the motor vehicle is improved at the turning, so that the traveling direction of the motor vehicle can be changed as desired by a driver.

The traveling state determining section 27 determines the vehicle traveling state, for example, on the basis of the operation angle δh or the steering angle δ, the operating torque T and the change in the behavior of the motor vehicle (lateral acceleration Gy and yaw rate γ). A more specific example of the determination of the traveling state is disclosed, for example, in Japanese Unexamined Patent Publication No. 9-301213 (1997). A process disclosed in this patent publication can be utilized for the operation of the traveling state determining section 27.

In accordance with this embodiment, it is determined which of the urgent state, the straight traveling state and the turning state is the present vehicle traveling state, and the steering control (the control of the steering actuator 2) is performed to bring the lateral acceleration Gy and the yaw rate γ into the phase advanced relation, the phase delayed relation or the neutrally balanced relation depending on the result of the determination. Thus, the dynamic characteristics of the motor vehicle can be optimized for the present traveling state, so that the overall vehicle dynamic characteristics can be improved. Therefore, all the parameters including the responsiveness, the rigidity and the compliance can advantageously be satisfied.

The present invention may be embodied in any of various ways other than the embodiment described above. For example, the transfer function C(s) represented by the expression (1) is merely one example, and a transfer function C(s) as represented by the following expression (5) may be employed:

$$C(s)= \frac{T_1 \cdot s+1}{T_2 s^2+T_3 s+1} \qquad (5)$$

wherein $T_1$, $T_2$, $T_3$ are variable time constants.

In this case, the steering control can be performed to bring the lateral acceleration Gy and the yaw rate γ into the phase advanced relation, the phase delayed relation or the neutrally balanced relation by properly setting the time constants $T_1$, $T_2$, $T_3$. More specifically, the phase advanced relation can be achieved by setting the time constants $T_1$ at a higher level, while the phase delayed relation can be achieved by setting the time constants $T_3$ at a higher level.

Although the embodiment described above is directed to a case where two wheels of the four-wheeled motor vehicle are steerable, the present invention is applicable to a system having four steerable wheels. In this case, when it is determined that the vehicle traveling state is the turning state, the steering control is preferably performed separately on the font wheels and the rear wheels so that the lateral acceleration Gy and the yaw rate γ are controlled to be in the phase advanced relation and in the neutrally balanced relation, respectively, at an initial stage of the turning, and then each controlled to be brought into the neutrally balanced relation. Thus, the motor vehicle has a reduced tendency toward spinning with an improved responsiveness at the initial stage of the turning, so that the control of the traveling direction of the motor vehicle can further be improved.

Further, the embodiment described above is directed to a case where the steering wheel 1 is used as the operation means, but other operation means such as a lever and a pedal may be employed.

While the present invention has been described in detail by way of the embodiment thereof, it should be understood that the foregoing disclosure is merely illustrative of the technical principles of the present invention but not limitative of the same. The scope of the present invention is to be limited only by the appended claims.

**Claims**

1.  A motor vehicle steering system for a driving steering mechanism (2, 3) of a motor vehicle (50) on the basis of operation of operation means (1), the motor vehicle steering system comprising:

    standard value computing means (25) for computing a standard value (γ*; Gγ*) of a behavioral variable (γ; Gγ) indicative of behavior of the motor vehicle (50) in accordance with the operation of the operation means (1);
    vehicle behavior detecting means (15, 16) for detecting an actual value (γ; Gγ) of the behavioral variable indicative of actual behavior of the motor vehicle (50);
    traveling state determining means (27) for determining a traveling state of the motor vehicle (50); and

a steering controlling section (20, 22, 26, 28) for driving the steering mechanism (2, 3) according to an operation angle ($\delta$h) of the operation means (1);

**characterized by**

a traveling state adapting means (26) for causing the steering controlling section (20, 22, 26, 28) to modify a control state of the steering mechanism (2, 3) so as to control a change in the behavioral variable ($\gamma$; G$\gamma$) in a phase advanced manner, a phase delayed manner or a neutrally balanced manner on the basis of the result of the determination of the traveling state determining means (27).

2. The system of claim 1, **characterized in that** the traveling state determining means (27) is capable of distinguishing between an urgent state where the operation means (1) is operated for urgent steering, a straight traveling state where the motor vehicle (50) is traveling straight, and a turning state where the motor vehicle (50) is turned.

3. The system of claim 2, **characterized in that**, when the traveling state determining means (27) determines that the vehicle traveling state is the urgent state, the traveling state adapting means (26) sets the control state of the steering controlling section (20, 22, 26, 28) so as to control the change in the vehicle behavioral variable in the phase advanced manner.

4. The system of claim 2 or 3, **characterized in that**, when the traveling state determining means (27) determines that the vehicle traveling state is the straight traveling state, the traveling state adapting means (26) sets the control state of the steering controlling section (20, 22, 26, 28) so as to control the change in the vehicle behavioral variable in the phase delayed manner.

5. The system of any of claims 2 to 4, **characterized in that**, when the traveling state determining means (27) determines that the vehicle traveling state is the turning state, the traveling state adapting means (26) sets the control state of the steering controlling section (20, 22, 26, 28) so as to control the change in the vehicle behavioral variable in the neutrally balanced manner.

6. The system of any of claims 1 to 5, **characterized in that** the operation means (1) is mechanically disengaged from the steering mechanism (2, 3), and the steering mechanism (2, 3) is electrically controlled according to the operation of the operation means (1).

7. The system of any of claims 1 to 6, **characterized**

in that the behavioral variable ($\gamma$; G$\gamma$) of the motor vehicle (50) includes at least one of a lateral acceleration (G$\gamma$) and a yaw rate ($\gamma$) of the motor vehicle.

8. The system of any of claims 1 to 7, **characterized by** operation angle detecting means (11) for detecting the operation angle ($\delta$h) of the operation means (1),

wherein the traveling state adapting means (26) includes steering angle converting means (26) for determining a control steering angle (C(s)·$\delta$h) through conversion of the operation angle ($\delta$h) detected by the operation angle detecting means (11) by employing a transfer function (C(s)), and modifying the transfer function (C(s)) according to the result of the determination of the traveling state determining means (27).

9. The system of claim 8, **characterized in that** the transfer function C(s) is represented by the following expression A:

$$C(s) = \frac{\beta T \cdot s + 1}{\alpha T \cdot s + 1} \qquad \text{(A)}$$

wherein T is a time constant, s is a Laplacian, and $\alpha$ and $\beta$ are variable coefficients,

wherein the steering angle converting means (26) variably sets the coefficients $\alpha$ and/or $\beta$ according to the result of the determination of the traveling state determining means (27).

10. The system of claim 8, **characterized in that** the transfer function C(s) is represented by the following expression B:

$$C(s) = \frac{T_1 \cdot s + 1}{T_2 s^2 + T_3 s + 1} \qquad \text{(B)}$$

wherein s is a Laplacian, and $T_1$, $T_2$, $T_3$ are variable time constants,

wherein the steering angle converting means (26) variably sets the time constants $T_1$ and/or $T_2$ and/or $T_3$ according to the result of the determination of the traveling state determining means (27).

**Patentansprüche**

1. Kraftfahrzeuglenksystem für einen antreibenden Lenkmechanismus (2, 3) eines Kraftfahrzeugs (50) auf der Grundlage einer Betätigung von Betätigungsmitteln (1), wobei das Kraftfahrzeuglenksystem aufweist:

Standardwert-Berechnungsmittel (25) zum Berechnen eines Standardwertes ($\gamma^*$; G$\gamma^*$) einer

Verhaltensvariablen (γ; Gγ), der ein Verhalten des Kraftfahrzeuges (50) gemäß der Betätigung der Betätigungsmittel (1) angibt;
Fahrzeugverhalten-Erfassungsmittel (15, 16) zum Erfassen eines aktuellen Wertes (γ; Gγ) der Verhaltensvariablen, der ein aktuelles Verhalten des Kraftfahrzeuges (50) angibt;
Fahrtzustand-Bestimmungsmittel (27) zum Bestimmen eines Fahrtzustandes des Kraftfahrzeuges (50); und
einen Lenksteuerabschnitt (20, 22, 26, 28) zum Antreiben des Lenkmechanismus (2, 3) gemäß einem Betätigungswinkel (δh) der Betätigungsmittel (1);

**gekennzeichnet durch**

Fahrtzustand-Anpassungsmittel (26) zum Veranlassen, dass der Lenksteuerabschnitt (20, 22, 26, 28) einen Steuerzustand des Lenkmechanismus (2, 3) modifiziert, um eine Änderung der Verhaltensvariablen (γ; Gγ) auf phasenvoreilende Art und Weise, auf phasenverzögernde Art und Weise oder auf neutral ausgeglichene Art und Weise zu steuern, und zwar auf der Grundlage des Ergebnisses der Bestimmung der Fahrtzustand-Bestimmungsmittel (27).

2. System nach Anspruch 1, **dadurch gekennzeichnet, dass** die Fahrtzustand-Bestimmungsmittel (27) dazu in der Lage sind, zwischen einem dringenden Zustand, bei dem die Betätigungsmittel (1) zum Zwecke eines dringenden bzw. eiligen Lenkvorganges betätigt werden, einem Geradeausfahrtzustand, bei dem das Kraftfahrzeug (50) geradeaus fährt, und einem Abbiegezustand zu unterscheiden, bei dem das Kraftfahrzeug (50) abbiegt bzw. in einer Kurve gefahren wird.

3. System nach Anspruch 2, **dadurch gekennzeichnet, dass** dann, wenn die Fahrtzustand-Bestimmungsmittel (27) bestimmen, dass der Fahrtzustand des Fahrzeugs der dringende Zustand ist, die Fahrtzustand-Anpassungsmittel (26) den Steuerzustand des Lenksteuerabschnittes (20, 22, 26, 28) derart einstellen, dass die Änderung der Verhaltensvariablen des Fahrzeugs auf phasenvoreilende Art und Weise gesteuert wird.

4. System nach Anspruch 2 oder 3, **dadurch gekennzeichnet, dass** dann, wenn die Fahrtzustand-Bestimmungsmittel (27) bestimmen, dass der Fahrtzustand des Fahrzeugs der Geradeausfahrtzustand ist, die Fahrtzustand-Anpassungsmittel (26) den Steuerzustand des Lenksteuerabschnittes (20, 22, 26, 28) so einstellen, dass die Änderung der Verhaltensvariablen des Fahrzeugs auf die phasenverzögernde Art und Weise gesteuert wird.

5. System nach einem der Ansprüche 2 bis 4, **dadurch gekennzeichnet, dass** dann, wenn die Fahrtzustand-Bestimmungsmittel (27) bestimmen, dass der Fahrtzustand des Fahrzeugs der Abbiegezustand ist, die Fahrtzustand-Anpassungsmittel (26) den Steuerzustand des Lenksteuerabschnittes (20, 22, 26, 28) so einstellen, dass die Änderung der Verhaltensvariablen des Fahrzeugs auf die neutral ausgeglichene Art und Weise gesteuert wird.

6. System nach einem der Ansprüche 1 bis 5, **dadurch gekennzeichnet, dass** die Betätigungsmittel (1) von dem Lenkmechanismus (2, 3) mechanisch entkoppelt sind und dass der Lenkmechanismus (2, 3) gemäß der Betätigung der Betätigungsmittel (1) elektrisch gesteuert wird.

7. System nach einem der Ansprüche 1 bis 6, **dadurch gekennzeichnet, dass** die Verhaltensvariable (γ; Gγ) des Kraftfahrzeugs (50) wenigstens eine Querbeschleunigung (Gγ) und eine Gierrate (γ) des Kraftfahrzeugs beinhaltet.

8. System nach einem der Ansprüche 1 bis 7, **gekennzeichnet durch** Betätigungswinkel-Erfassungsmittel (11) zum Erfassen des Betätigungswinkels (δh) der Betätigungsmittel (1), wobei die Fahrtzustand-Anpassungsmittel (26) Lenkwinkel-Konvertierungsmittel (26) aufweisen, zum Bestimmen eines Steuerlenkwinkels (C(s)·δh) **durch** Konvertierung des Betätigungswinkels (δh), der von den Betätigungswinkel-Erfassungsmitteln (11) erfasst ist, und zwar **durch** Verwenden einer Übertragungsfunktion (C(s)) und **durch** Modifizieren der Übertragungsfunktion (C(s)) gemäß dem Ergebnis der Bestimmung der Fahrtzustand-Bestimmungsmittel (27).

9. System nach Anspruch 8, **dadurch gekennzeichnet, dass** die Übertragungsfunktion C(s) durch den folgenden Ausdruck A wiedergegeben ist:

$$C(s) = \frac{\beta T \cdot s + 1}{\alpha T \cdot s + 1} \qquad (A)$$

wobei T eine Zeitkonstante ist, wobei s eine Laplace-Variable ist, und wobei α und β variable Koeffizienten sind,
wobei die Lenkwinkel-Konvertierungsmittel (26) die Koeffizienten α und/oder β variabel gemäß dem Ergebnis der Bestimmung der Fahrtzustand-Bestimmungsmittel (27) einstellen.

10. System nach Anspruch 8, **dadurch gekennzeichnet, dass** die Übertragungsfunktion C(s) durch den folgenden Ausdruck B wiedergegeben ist:

$$C(s) = \frac{T_1 \cdot s + 1}{T_2 s^2 + T_3 s + 1} \qquad (B)$$

wobei s eine Laplace-Variable ist und wobei $T_1$, $T_2$ und $T_3$ variable Zeitkonstanten sind,

wobei die Lenkwinkel-Konvertierungsmittel (26) die Zeitkonstanten $T_1$ und/oder $T_2$ und/oder $T_3$ variabel gemäß dem Ergebnis der Bestimmung der Fahrtzustand-Bestimmungsmittel (27) einstellen.

## Revendications

1. Système de direction de véhicule à moteur pour un mécanisme de direction et d'entraînement (2, 3) d'un véhicule à moteur (50) fondé sur le fonctionnement d'un moyen d'actionnement (1), le système de direction du véhicule à moteur comprenant :

des moyens de calcul (25) de valeur standard pour calculer une valeur standard ($\gamma^*$ ; G$\gamma^*$) d'une variable de comportement ($\gamma$ ; G$\gamma$) indiquant le comportement du véhicule à moteur (50) en fonction du fonctionnement du moyen d'actionnement (1) ;

le moyen de détection du comportement du véhicule (15, 16) pour détecter une valeur réelle ($\gamma$ ; G$\gamma$) de la variable de comportement indiquant le comportement réel du véhicule à moteur (50) ;

des moyens de détermination de l'état de déplacement (27) pour déterminer un état de déplacement du véhicule à moteur (50) ; et

une section de commande de direction (20, 22, 26, 28) pour entraîner le mécanisme de direction (2, 3) selon un angle de fonctionnement ($\delta$h) du moyen d'actionnement (1) ;

**caractérisé par**

un moyen d'adaptation de l'état de déplacement (26) pour amener la section de commande de direction (20, 22, 26, 28) à modifier un état de commande du mécanisme de direction (2, 3) afin de commander un changement de la variable de comportement ($\gamma$ ; G$\gamma$) avec une avance de phase , avec un retard de phase ou avec un équilibre neutre en se fondant sur le résultat de la détermination du moyen de détermination de l'état de déplacement (27).

2. Système selon la revendication 1, **caractérisé en ce que** le moyen de détermination de l'état de déplacement (27) est apte à faire une distinction entre un état d'urgence dans lequel le moyen d'actionnement (1) est actionné pour diriger le véhicule dans une situation d'urgence, un état de déplacement droit dans lequel le véhicule à moteur (50) se déplace en ligne droite, et un état de virage dans lequel le véhicule à moteur (50) tourne.

3. Système selon la revendication 2, **caractérisé en ce que**, lorsque le moyen de détermination de l'état de déplacement (26) détermine que l'état de déplacement du véhicule est l'état d'urgence, le moyen d'adaptation de l'état de déplacement (27) règle l'état de commande de la section de commande de direction (20, 22, 26, 28) de manière à commander le changement de la variable de comportement du véhicule avec une avance de phase.

4. Système selon la revendication 2 ou 3, **caractérisé en ce que**, lorsque le moyen de détermination de l'état de déplacement (27) détermine que l'état de déplacement du véhicule est l'état de déplacement en ligne droite, le moyen d'adaptation de l'état de déplacement (26) règle l'état de commande de la section de commande de direction (20, 22, 26, 28) de manière à commander le changement de la variable de comportement du véhicule avec un retard de phase.

5. Système selon l'une quelconque des revendications 2 à 4, **caractérisé en ce que**, lorsque le moyen de détermination de l'état de déplacement (27) détermine que l'état de déplacement du véhicule est l'état de virage, le moyen d'adaptation de l'état de déplacement (26) règle l'état de commande de la section de commande de direction (20, 22, 26, 28) de manière à commander le changement de la variable de comportement du véhicule avec un équilibre neutre.

6. Système selon l'une quelconque des revendications 1 à 5, **caractérisé en ce que** le moyen d'actionnement (1) est désengrené mécaniquement du mécanisme de direction (2, 3) et le mécanisme de direction (2, 3) est électriquement commandé selon le fonctionnement du moyen d'actionnement (1).

7. Système selon l'une quelconque des revendications 1 à 6, **caractérisé en ce que** la variable de comportement ($\gamma$ ; G$\gamma$) du véhicule à moteur (50) comprend au moins une parmi une accélération latérale ( G$\gamma$) et un taux de lacet ($\gamma$) du véhicule à moteur.

8. Système selon l'une quelconque des revendications 1 à 7, **caractérisé par** un moyen de détection (11) de l'angle d'actionnement pour détecter l'angle d'actionnement ($\delta$h) du moyen d'actionnement (1), selon lequel le moyen d'adaptation de l'état de déplacement (26) comprend un moyen de conversion (26) de l'angle d'actionnement pour déterminer un angle de direction de commande (C(s)-$\delta$h) par le biais de la conversion de l'angle d'actionnement (δh) détecté par le moyen de détection (11) de l'angle d'actionnement en utilisant une fonction de transfert (C(s)) et en modifiant la fonction de transfert (C(s)) selon le résultat de la détermination du moyen de détermination (27) de l'état de déplacement.

**9.** Système selon la revendication 8, **caractérisé en ce que** la fonction de transfert C(s) est représentée par l'expression suivante A :

$$C(s) = \frac{\beta T.s + 1}{\alpha T.s + 1} \qquad (A)$$

où T est une constante de temps, s est un opérateur laplacien, et $\alpha$ et $\beta$ sont des coefficients variables, où le moyen de conversion (26) de l'angle de direction règle de manière variable les coefficients $\alpha$ et/ou $\beta$ selon le résultat de la détermination du moyen de détermination (27) de l'état de déplacement.

**10.** Système selon la revendication 8, **caractérisé en ce que** la fonction de transfert C(s) est représentée par l'expression suivante B :

$$C(s) = \frac{T_1.s + 1}{T_2 s^2 + T_3 s + 1} \qquad (B)$$

où s est un opérateur laplacien, et $T_1$, $T_2$, $T_3$ sont des constantes de temps variables, où le moyen de conversion de l'angle de direction (26) règle de manière variable les constantes de temps $T_1$ et/ou $T_2$ et/ou $T_3$ selon le résultat de la détermination du moyen de détermination (27) de l'état de déplacement.

FIG. 1

## FIG. 2

Block diagram showing: TARGET VALUE COMPUTING SECTION (25), STEERING ANGLE CONVERTING SECTION C(s) (26), TRAVELING STATE DETERMINING SECTION (URGENT STATE, STRAIGHT TRAVELING STATE, TURNING STATE) (27), TARGET STEERING ANGLE COMPUTING SECTION (28), STEERING ACTUATOR (2), MOTOR VEHICLE (50), STEERING ANGLE SENSOR (13), SPEED SENSOR (14), LATERAL ACCELERATION SENSOR (15), YAW RATE SENSOR (16).

EP 1 088 739 B1